# EUROPEAN PATENT APPLICATION

(11) **EP 1 944 821 A2**
(43) Date of publication of application: **16.07.2008**
(21) Application number: 07023172.5
(22) Date of filing: 29.11.2007
(51) Int. Cl.: H01M 8/02, H01M 8/12

(54) **Fuel-battery cell stack collector and direct flame type fuel battery module using the same**

(30) Priority: 29.11.2006 JP 2006322421
(71) Applicant: SHINKO ELECTRIC INDUSTRIES CO., LTD., Nagano-shi, Nagano 381-2287 (JP)
(72) Inventor: Tokutake, Yasue, Nagano-shi Nagano 381-2287 (JP); Suganuma, Shigeaki, Nagano-shi Nagano 381-2287 (JP); Yoshiike, Jun, Nagano-shi Nagano 381-2287 (JP); Katagiri, Fumimasa, Nagano-shi Nagano 381-2287 (JP)
(74) Representative: Zimmermann, Gerd Heinrich

(57) **Abstract**

A collector 6 for a fuel-battery cell stack, which is formed by a mesh-like metallic material, has a basic grid structure with 100 to 500 mesh, and includes a surface concavo-convex pattern having a surface pattern pitch A from one peak p to a next peak p' which is greater than a basic pitch P₀ forming the basic grid structure, where a size of direct flame type fuel battery module can be reduced by laminating a plurality of cells in a vertical direction with this collector interposed in-between.

## Description

The present invention relates to a direct flame type fuel battery, and more particularly to a module having a stack structure including a plurality of single cells laminated which is to be used in the direct flame type fuel battery, and a collector for a fuel-battery cell stack which is to be used in the module.

A type of a fuel battery includes a direct flame type fuel battery in which a cell having such a structure as to form an anode layer and a cathode layer with a solid electrolytic layer interposed in-between is disposed in a flame or in the vicinity thereof and the anode side is exposed to the flame, thereby generating an electric power. The direct flame type fuel battery and a fuel battery module to be used therein have been described in below, for example.

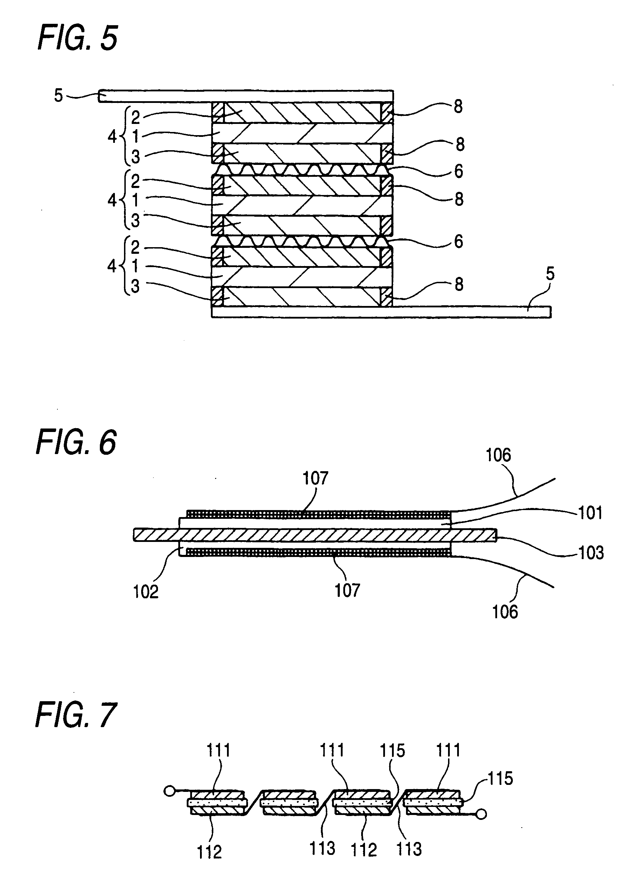

JP-A-2004-139936 discloses a cell which is fabricated by embedding or fixing a mesh-like metal 107 into at least one of an anode layer 101 and a cathode layer 102 of a solid electrolytic fuel-battery cell for the purpose of reinforcement as shown in Fig. 6. In Fig. 6, 103 denotes a solid electrolytic layer and 106 denotes a lead wire to be connected to the anode layer 101 or the cathode layer 102.

JP-A-2005-353571 discloses a direct flame type fuel battery module having a structure in which a plurality of cells is arranged in a transverse direction, and an anode layer 111 of one cell and a cathode layer 112 of an adjacent cell thereto are connected to each other through a mesh-like metal 113 as shown in Fig. 7, for example. The mesh-like metal 113 is fixed to the anode layer 111 of the cell and the cathode layer 112 of the adjacent cell. In Fig. 7, 115 denotes a solid electrolytic layer.

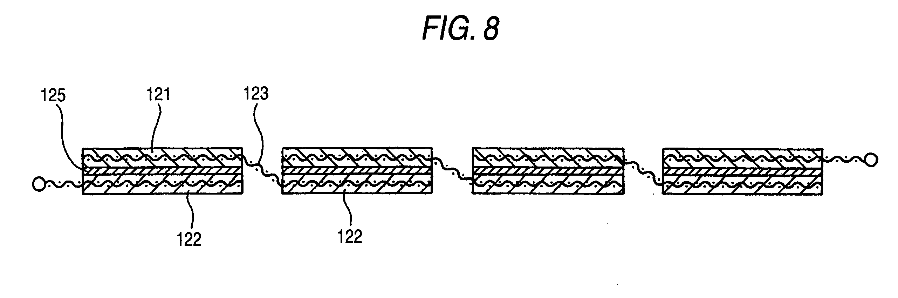

JP-A-2006-190592 also discloses a direct flame type fuel battery module having a structure in which a plurality of cells is arranged in a transverse direction, and an anode layer 121 of one cell and a cathode layer 122 of an adjacent cell thereto are connected to each other through a mesh-like metal 123 as shown in Fig. 8, for example. The mesh-like metal 123 is embedded in the anode layer 121 of the cell and the cathode layer 122 of the adjacent cell. In Fig. 8, 125 denotes a solid electrolytic layer.

The direct flame type fuel battery modules disclosed in the Patent Documents 2 and 3 have a structure in which individual cells are arranged in the transverse direction (a planar direction) . For this reason, there is a disadvantage in that an area occupied by the module is increased, which requires larger installation area of the fuel battery in case of obtaining a high-power fuel battery using such a module.

In light of the above, a collector according to independent claim 1, and a direct flame type fuel battery module according to independent claim 7 are provided.

Further advantages, features, aspects and details are evident from the dependent claims, the description and the drawings.

It is an object in this invention to provide a compact fuel or handy battery module capable of implementing a direct flame type fuel battery having a small size and a high power profiles. It is another object in this invention to provide an improved part member capable of implementing the compact fuel battery module.

A part member capable of implementing a compact fuel battery module provided by the invention is a collector for a fuel-battery cell stack which is formed by a mesh-like metallic material having a basic grid structure with 80 to 500 mesh. Further, said collector is formed to have a surface concavo-convex pattern of which surface pattern pitch becomes greater than a basic pitch that is defined as a distance from one top to the next top in a wire forming the basic grid structure. The surface concavo-convex pattern is defined as a distance from one peak to the next peak thereof.

In this invention, the surface pattern pitch is preferably 300 to 2000 µm and is particularly preferably 800 to 1000 µm.

More over, as to a difference in a vertical direction between one peak and the next peak of the wire after a surface concavo-convex pattern is applied thereto, it can be determined by the height from the lowest point in-between to the point whichever is higher in said peaks. Such a difference in a vertical direction might be preferably 50 to 300 µm, and might be particularly preferably 150 to 200 µm.

A direct flame type fuel battery module according to the invention comprises a plurality of fuel-battery cells laminated in a vertical direction (a longitudinal direction) and the collector for a fuel-battery cell stack according to the invention is arranged between the two adjacent cells.

In a fuel battery module fabricated by laminating fuel-battery cells in a longitudinal direction by using a collector for a fuel-battery cell stack according to the invention, the module is vertically compressed during the time of fabrication so that a contact efficiency of the collector for a cell stack and anode/cathode layers of adjacent cells can be enhanced, resulting in a power being stably extracted from the module. The collector for a cell stack, which is interposed between the cells, is also functioning as a thermal expansion absorbing material due to a basic mesh structure, thereby contributing to a stable operation of the cell.

In the direct flame type fuel battery module according to the invention, furthermore, thanks for the lamination structure, an installation area becomes smaller than that of being required for a module according to the conventional art in which cells are arranged on a plane basis. Therefore, a size can be set to be smaller than that of the module according to the conventional art in the case where the power to be extracted is equal.

So that the manner in which the above recited features of the present invention can be understood in detail, a more particular description of the invention, briefly summarized above, may be had by reference to embodiments. The accompanying drawings relate to embodiments of the invention and are described in the following:
Fig. 1 is a typical view for explaining a direct flame type fuel battery module having a stack structure according to the invention,
Figs. 2A and 2B show a typical view for explaining a collector for a fuel-battery cell stack according to the invention,
Fig. 3 is a micrograph for a mesh-like metallic material subjected to a surface concavo-convex pattern application processing which is to be used as the collector for a fuel-battery cell stack according to the invention,
Fig. 4 is a typical view for explaining a fixation of a module to be utilized for fabricating the direct flame type fuel battery module according to the invention,
Fig. 5 is a typical view for explaining another fixing way for the module according to the invention,
Fig. 6 is a view for explaining a direct flame type fuel-battery cell according to the prior art,
Fig. 7 is a view for explaining a direct flame type fuel battery module according to the prior art, and
Fig. 8 is a view for explaining another direct flame type fuel battery module according to the prior art.

Embodiments of the present invention will be described hereinbelow by reference to the drawings. Unless otherwise specifically defined in the specification, terms have their ordinary meaning as would be understood by those of ordinary skill in the art.

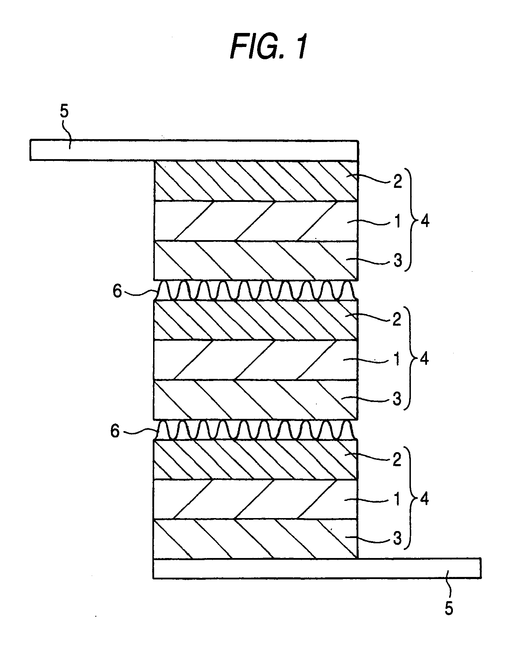

Fig. 1 shows a direct flame type fuel battery module having a stack structure according to the invention which uses a collector for a fuel-battery cell stack according to the invention. The module in Fig. 1 has a stack structure in which three fuel battery cells 4 are laminated. The fuel-battery cell 4 is constituted by disposing an anode layer 2 on either side and a cathode layer 3 on an opposite side in a solid electrolytic layer 1. A lead member 5 is fixed to the uppermost anode layer 2 and the lowermost cathode layer 3 in the stack structure in order to extract a power from the module. A collector 6 for a fuel-battery cell stack according to the invention is positioned between the anode layer 2 of the cell 4 and the cathode layer 3 of the adjacent cell 4.

The collector 6 for a fuel-battery cell stack according to the invention is formed by a mesh-like metallic material, and platinum, stainless steel, nickel or a nickel-based alloy can be used for the metal. The collector for a fuel-battery cell stack according to the invention is featured to have a basic grid structure selected in a range from 80 to 500 mesh(meshes per inch)where a basic grid structure thereof ca be defined as a distance from a top to a next top of a wire. Further, said collector has a surface concavo-convex pattern which can be obtained by applying the surface concavo-convex pattern over a mesh-like metallic material. The surface pattern pitch of said surface concavo-convex pattern which is defined as a distance from a peak to the next peak thereof is greater than a basic pitch that is defined as a distance from a top to a next top of a wire forming the basic grid structure.

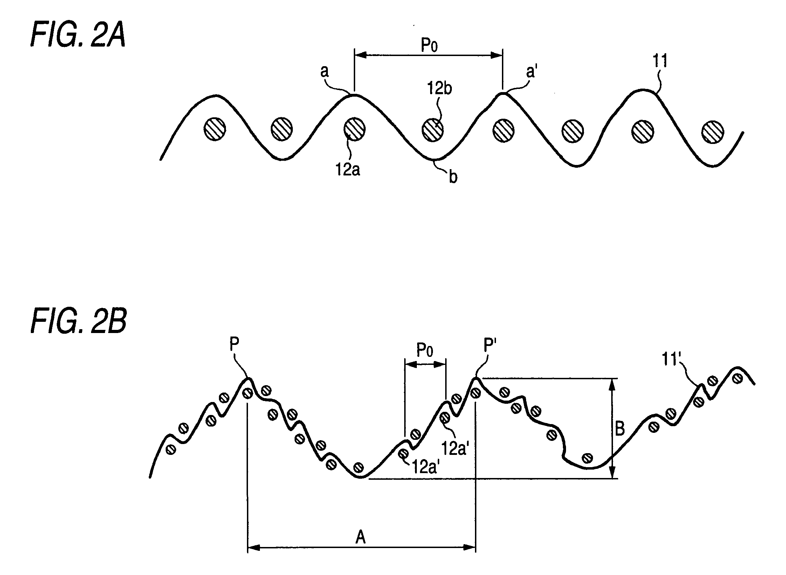

In the invention, various meshes can be used. By taking the case of a plain-woven mesh as an example, the collector for a fuel-battery cell stack according to the invention will be described in more detail with reference to Fig. 2. Fig. 2(a) typically shows a section of a mesh-like metal which has not been subjected to a surface concavo-convex pattern application processing for fabricating the collector for a fuel-battery cell stack according to the invention. One mesh in a basic grid structure of a mesh-like metal is equivalent to a region surrounded by a wire 11 shown typically in one curve and another wire (not shown) provided in parallel therewith, and wires 12a and 12b crossing the wire 11 and another adjacent wire (not shown) in positions of a top "a" of the wire 11 and an adjacent bottom "b" and corresponding positions of a top and a bottom of another wire provided in parallel (not shown). The basic grid structure of the mesh-like metal according to the invention has the number of meshes which corresponds to 80 to 500 mesh.

A distance from the top "a" to a next top "a "' of the wire 11 shown in Fig. 2A is equivalent to a basic pitch P₀ in the invention. The collector for a fuel-battery cell stack according to the invention is fabricated by executing a processing of applying a surface concavo-convex pattern having a surface pattern pitch which is greater than the basic pitch P₀ and is defined as a distance from a peak to the next peak over the mesh-like metallic material having the basic grid structure as described above. Fig. 2B shows a wire 11' in the collector for a cell stack according to the invention to which the surface concavo-convex pattern is applied. The wire 11' is equivalent to a wire obtained by executing the surface concavo-convex pattern application processing over the wire 11 shown in Fig. 2A. Scales in Figs. 2A and 2B are not identical to each other.

As is apparent from Fig. 2B, the wire 11' in the mesh-like metallic material to which the surface concavo-convex pattern is applied has a surface pattern pitch which is greater than the basic pitch P₀ in the wire 11 of Fig. 2A which has not been subjected to the surface concave-convex pattern application (which is equivalent to a distance between adjacent wires 12a' crossing the wire 11' in Fig. 2B with a wire interposed therebetween) and is defined as a distance A from a peak p to a next peak p'.

In a fuel battery module fabricated by laminating cells in a longitudinal direction by using a collector for a fuel-battery cell stack according to the invention to which the surface concavo-convex pattern is applied, it is possible to enhance a contact of the collector for a cell stack and anode or cathode layers, which are adjacent to each other, more greatly by compressing the module vertically in the fabrication. Thus, it is possible to stably extract a power from the module. A collector for a cell stack, which is interposed between cells and basically has a mesh structure, is also functioning as a thermal expansion absorbing material, thereby contributing to a stable operation of the cell in the same manner.

By using the collector for a fuel-battery cell stack according to the invention, furthermore, it is possible to obtain an output which is equal to that of a module according to the prior art shown in Figs. 7 and 8 in which the cells are arranged on a plane basis in a smaller installation area than that in the module according to the prior art.

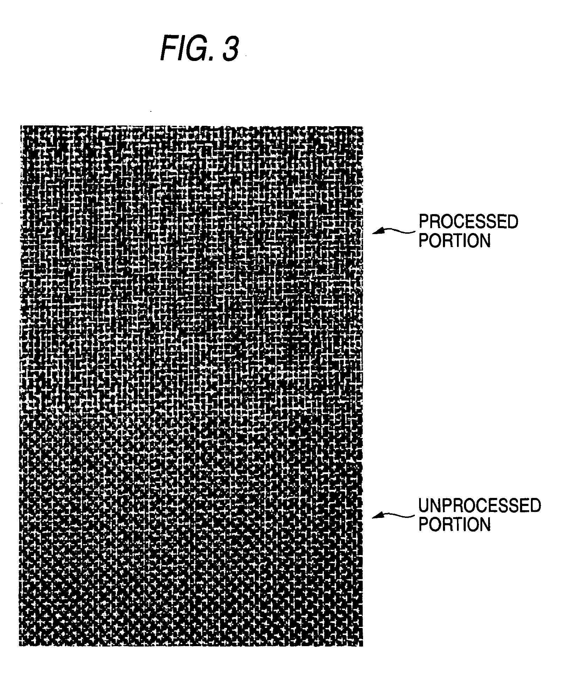

The collector for a fuel-battery cell stack according to the invention which has the surface concavo-convex pattern can be fabricated easily by a method of interposing a mesh-like metallic material to be a processing work piece between an elastic body (for example, silicone rubber) and another mesh material having the smaller number of meshes (coarser) than the processing work piece and pressurizing them to carry out a plastic deformation. Fig. 3 shows a micrograph for the mesh-like metal processed by the method. An upper portion in the micrograph is subjected to the surface concavo-convex pattern application processing and is used as the collector for a fuel-battery cell stack according to the invention. All of the mesh-like metals such as platinum, stainless steel, nickel and a nickel-based alloy described above as the material for the collector for a fuel-battery cell stack according to the invention can be easily subjected to the surface concavo-convex pattern application processing by the method. A lower portion of the micrograph is an unprocessed portion which can be separated from the processed portion so as to be used as a lead member for extracting a power from the fuel battery module.

For the mesh-like metallic material to be used in the invention, it is possible to use a material having 80 to 500 mesh. Since a metallic material having a smaller number of meshes than 80 mesh has a great diameter and a high strength, it cannot be processed easily. Even if the metallic material can be processed, moreover, there is a higher possibility that a cell might be broken in cell stacking and an operation, which is not preferable. Since a metallic material having a greater number of meshes than 500 mesh has a small diameter and a low strength, it can be processed easily. However, a contact insufficiency between layers is apt to be generated so that a stable operation cannot be expected, which is not preferable condition.

A way for weaving the mesh-like metallic material is not particularly restricted but a general weaving way such as a plain weave can be used.

In the collector for a fuel-battery cell stack according to the invention, it is preferable that the distance A between the adjacent peaks p and p' of the wire 11' shown in Fig. 2B (that is, the surface pattern pitch) should be 300 to 2000 µm.

If the distance A is smaller than 300 µm, an interlayer contact pressure is raised so that a possibility of a cell breakage is increased. If the distance A exceeds 2000 µm, the interlayer contact pressure is reduced so that the stable operation is obtained with difficulty. An optimum distance A between the adjacent peaks p and p' in the wire 11' is 800 to 1000 µm.

In the collector for a fuel-battery cell stack according to the invention, it is preferable that a height of the wire 11' shown in B of Fig. 2B (which is defined as a difference in a vertical direction between the lowest point between the peaks and a greater height in the peaks) should be 50 to 300 µm. If the height is smaller than 50 µm, the interlayer contact pressure is raised and the possibility of the cell breakage is increased to balance with the distance A between the peaks p and p'. The tendency is more remarkable when the distance A between p and p' is shorter. If the height exceeds 300 µm, the interlayer contact pressure is reduced so that the stable operation is obtained with difficulty to balance with the distance A between the peaks p and p'. The tendency is more remarkable when the distance A between p and p' is longer. An optimum height B is 150 to 200 µm.

A solid electrolytic layer, an anode layer and a cathode layer which are used in the collector for a fuel-battery cell stack according to the invention can be fabricated by a general method utilizing a material to be used in the same member of an ordinary solid electrolytic fuel-battery cell.

For the solid electrolytic layer, it is possible to use the following material (a), (b) or (c), for example.
(a) YSZ (yttria-stabilized zirconia), ScSZ (scandia-stabilized zirconia) or zirconia based ceramics obtained by further doping the zirconia with Ce or Al.
(b) Ceria based ceramics such as SDC (samaria doped ceria) or GDC (gadolia doped ceria).
(c) LSGM (lanthanum gallate) or bismuth oxide based ceramics.

For the anode layer, it is possible to use the following material (a), (b) or (c), for example.
(a) Cermet of nickel and yttria-stabilized zirconia based, scandia-stabilized zirconia based or ceria based (SDC, GDC or YDC) ceramic.
(b) Sintered body containing conductive oxide as a principal component (50 to 99 % by weight) (nickel oxide having lithium dissolved therein can be used as the conductive oxide, for example).
(c) A material obtained by blending the material (a) or (b) with a metal formed by a platinum group element or oxide thereof in an amount of approximately 1 to 10 % by weight.

For the cathode layer, for example, it is possible to use a material such as a manganate compound, a gallium compound or a cobalt compound of a rare earth element such as lanthanum having strontium (Sr) added thereto or samarium (for example, lanthanum strontium manganite, lanthanum strontium cobaltite or samarium strontium cobaltite).

For the lead member to be used in the collector for a fuel-battery cell stack according to the invention, it is possible to use any well-known lead member. As an example, it is possible to take, as an example, a conductor taking a shape of a mesh or a foil which is fabricated by the same platinum, stainless steel, nickel or a nickel based alloy as the metallic material of the collector for a cell stack.

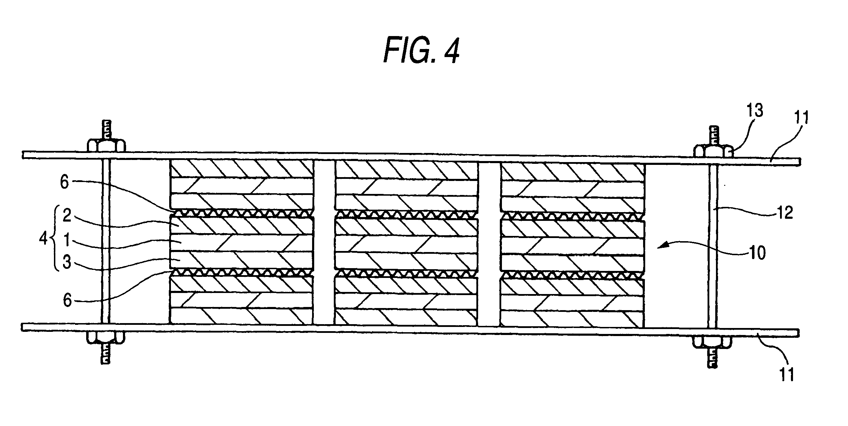

As a method of fabricating a direct flame type fuel battery module by using the collector for a fuel-battery cell stack according to the invention, next, description will be given to two methods corresponding to a material to be used for a collector for a cell stack.
(1) The case in which a material of a collector for a cell stack is a metal other than platinum (Pt):
   In this case, when a metal of the collector material is heated to a high temperature (approximately 900 to 1200°C) at which a cell is annealed, it is oxidized. Therefore, the respective cells are annealed in advance, and thereafter a collector material is disposed therebetween to form a cell stack. As shown in Fig. 4, next, a perforated or frame-like plate 11 is disposed on the upper and the lower parts of a cell stack 10, and a bolt 12 penetrating therethrough and a nut 13 are used to fix the cell stack 10 between the upper and lower plates 11. By the fastening function of the upper and lower plates, a collector 6 between the respective cells is provided in close contact with an anode layer on either side and a cathode layer on an opposite side so that electrical connection between the upper and lower cells can be maintained tightly. If the material of the plate 11 is conductive, the plate 11 can be utilized for extracting a power from a finished module.
   The cell can be also fixed by using a heat resisting adhesive. In this case, as shown in Fig. 5, a cell 4 is bonded to the upper and lower collectors 6 with a heat resisting adhesive 8 disposed on the periphery of an anode layer 2 and a cathode layer 3 in each cell 4 . The adhesive 8 can be also utilized for connecting the uppermost anode layer 2 and the lowermost cathode layer 3 in the stack to a lead member 5. In the case in which the adhesive is used, it is preferable to vertically compress the stack in a bonding work in order to carry out a tightly electrical connection of the upper and lower cells.
(2) The case in which the material of the collector for a cell stack is platinum (Pt):
   In this case, the platinum is not oxidized even if it is heated to a high temperature at which the cell is annealed. Therefore, it is possible to fabricate a cell stack collector by disposing the collector material between the cells to form a stack and annealing them at the same time. It is also possible to utilize the fixing method using a bolt and a nut or the fixing method using a heat resisting adhesive which has been described in the (1).
   The direct flame type fuel battery module according to the invention can be fabricated by laminating a desirable number of cells. The module thus fabricated can be used in combination with another module if necessary.
   The cells used in this invention might be fabricated in various ways, however, the followings are the representative methods to be employed for fabricating them.

### (Method 1)

Forming an anode electrode layer, an electrolyte layer and a cathode electrode layer, each being formed on the respective green sheet; laminating those layers and annealing them.

### (Method 2)

Forming an electrolyte layer on the green sheet and anneal it; pasting anode electrode material and cathode electrode material on the respective surface of the electrolyte layer; annealing said pasted electrolyte layer again.

### [Example]

While a collector for a fuel-battery cell stack and a direct flame type fuel battery module using the collector for a fuel-battery cell stack according to the invention will be further described based on an example, the invention is not restricted to the following example.

By using an SSC (samarium strontium cobaltite : Sm_{0.5}.Sr_{0.5}CoO₃) - SDC (samaria doped ceria : Ce_{0.8}SM_{0.2}O_{1.9}) mixing paste (a composition ratio : 50 % by weight - 50 % by weight), a cathode green sheet having a dry film thickness of approximately 180 µm in a dimension of 10 X 10 mm was fabricated. A solid electrolytic green sheet having a dry film thickness of approximately 70 µm in the same dimension was formed thereon by the SSC (samarium strontium cobaltite : Sm_{0.5}Sr_{0.5}CoO₃) - SDC (samaria doped ceria : Ce_{0.8}Sm_{0.2}O_{1.9}) mixing paste (a composition ratio : 10 % by weight - 90 % by weight). Subsequently, an anode green sheet having a dry film thickness of approximately 180 µm in the same dimension was formed on the electrolytic green sheet by an NiO - SDC mixing paste (a composition ratio: 60 % by weight - 40 % by weight). Thus, a green sheet laminated product for a cell was fabricated.

An SUS mesh material having 400 mesh was put on a silicone rubber sheet and an SUS mesh material having 20 mesh or less (or an Ni mesh material may be used) was put thereon, and a load of 10 to 30 kg/cm² was applied to compress the SUS mesh so that the SUS mesh was thus subjected to a surface concavo-convex processing. The SUS mesh thus processed was cut into the same dimension of 10 X 10 mm as that of the green sheet so that a collector for a cell stack was fabricated. In the collector, a basic pitch was approximately 120 µm, a surface pattern pitch was approximately 900 µm, and a difference between heights on the highest point and the lowest point between peaks was approximately 200 µm.

The cells are stacked with the collector for a cell stack interposed therebetween over the SUS mesh material having 400 mesh which is used as a lead member and is not subjected to the surface concavo-convex processing. Subsequently, an SUS mesh to be another lead member was mounted on an uppermost green sheet laminated product. A collector of the member thus obtained was put in a furnace and was annealed at 900°C for three hours. Consequently, a fuel battery module including three laminated cells (which is equivalent to the module shown typically in Fig. 1) was fabricated.

An outermost anode layer of the fuel battery module was exposed to a flame of an alcohol lamp. As a result, an output of 100 mW was observed at an open circuit voltage of 0.8 V.

For comparison, the same fuel battery module fabricated by using the SUS mesh material having 4.00 mesh to which a surface concavo-convex pattern is not applied was exposed to the flame. As a result, an output of 30 mW was observed at the open circuit voltage of 0.8 V.

For another comparison, a collector of a member formed by arranging a cell fabricated as described above in a transverse direction and connecting an anode and a cathode thereto through the SUS mesh material having 400 mesh which is not subjected to a surface concavo-convex processing was annealed for three hours in a furnace at 900°C. Consequently, a fuel battery module according to the prior art which is equivalent to that shown typically in Fig. 7 was fabricated. An anode layer side of the fuel battery module was exposed to the flame of the alcohol lamp. As a result, an output of 250 to 300 mW was observed at an open circuit voltage of 2.4 V.

According to some embodiments, which can be combined with other embodiments described herein, a collector for a fuel-battery cell stack, which is formed by a mesh-like metallic material, has a basic grid structure with 100 to 500 mesh, is provided and which includes a surface concavo-convex pattern having a surface pattern pitch A from one peak p to a next peak p' which is greater than a basic pitch P₀ forming the basic grid structure, where a size of direct flame type fuel battery module can be reduced by laminating a plurality of cells in a vertical direction with this collector interposed in-between.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

## Claims

1. A collector (6) for a fuel-battery cell stack which is formed by a mesh-like metallic material selected from 80 to 500 mesh, and has a basic grid structure where a basic pitch thereof is defined as a distance from one top to a next top in a wire (11') forming a part of the basic grid structure, wherein,
said collector for a fuel-battery cell stack includes a surface concavo-convex pattern with a surface pattern pitch (A) that is defined as a distance from one peak to a next peak thereof, said surface concavo-convex pattern being determined by the surface pattern pitch which is greater than the basic pitch.

2. The collector for a fuel-battery cell stack according to claim 1, wherein the surface pattern pitch is 300 to 2000 µm.

3. The collector for a fuel-battery cell stack according to any of claims 1 to 2, wherein the surface pattern pitch is 800 to 1000 µm.

4. The collector for a fuel-battery cell stack according to any of claims 1 to 3, wherein a difference (B) in a vertical direction between said one peak and said next peak of a wire, to which a surface concavo-convex pattern is applied, is defined as a height from the lowest point in-between to the point whichever is higher in said peaks, and said difference in the vertical direction is 50 to 300 µm.

5. The collector for a fuel-battery cell stack according to any of claims 1 to 4, wherein said difference in the vertical direction is 150 to 200 µm.

6. The collector for a fuel-battery cell stack according to any of claims 1 to 5, wherein the collector is formed by platinum, stainless steel, nickel or a nickel based alloy.

7. A direct flame type fuel battery module comprising:
a plurality of fuel-battery cells (4) laminated in a vertical direction, and
a collector (6) for a fuel-battery cell stack according to any of claims 1 to 6, which is arranged between two adjacent cells.
